# EUROPÄISCHE PATENTANMELDUNG

(11) **EP 2 782 168 A1**
(43) Veröffentlichungstag der Anmeldung: **24.09.2014**
(21) Anmeldenummer: 13160573.5
(22) Anmeldetag: 22.03.2013
(51) Int. Cl.: H01M 4/06, H01M 4/24, H01M 10/26, H01M 6/04, H01M 6/06, H01M 6/22, H01M 12/06, H01M 12/08

(54) **Elektroden-Festelektrolyt-Verbund für Batterien und seine Herstellung**

(71) Anmelder: VARTA Microbattery GmbH, 73479 Ellwangen (DE)
(72) Erfinder: Krebs, Martin, Dr., 73494 Rosenberg (DE); Bader, Carola, 73479 Ellwangen (DE)
(74) Vertreter: Patentanwälte Ruff, Wilhelm, Beier, Dauster & Partner

(57) **Zusammenfassung**

Beschrieben wird ein Verfahren zur Herstellung eines Elektroden-Festelektrolyt-Verbunds für wässrige Batterien. Gemäß diesem wird eine Elektrode bereitgestellt sowie eine Elektrolytmischung, die auf die Elektrode aufgebracht wird. Die Elektrolytmischung enthält Wasser, Polyvinylalkohol, ein Leitsalz und/oder ein Alkalihydroxid, elektrisch nichtleitende Partikel und/oder Fasern aus einem in Wasser unlöslichen organischen und/oder anorganischen Feststoff sowie Styrol-Butadien-Kautschuk. Weiterhin beschrieben wird ein Elektroden-Festelektrolyt-Verbund, der nach einem solchen Verfahren herstellbar ist, sowie eine wässrige Batterie, umfassend einen derartigen Elektroden-Festelektrolyt-Verbund.

## Beschreibung

Die vorliegende Erfindung betrifft ein Verfahren zur Herstellung eines Elektroden-Festelektrolyt-Verbunds, einen nach dem Verfahren hergestellten Elektroden-Festelektrolyt-Verbund sowie wässrige Batterien, die einen derartigen Verbund aufweisen.

Der Begriff "Batterie" meinte ursprünglich mehrere in Serie geschaltete elektrochemische Zellen. Heute werden jedoch sehr häufig auch unter einzelnen elektrochemischen Zellen (Einzelzellen) Batterien verstanden. Dies wird auch im Rahmen der vorliegenden Anmeldung so gehandhabt.

Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. An der negativen Elektrode werden in einem Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionenleitenden Elektrolyten gewährleistet. In sekundären Zellen und Batterien ist diese Entladereaktion reversibel, es besteht also die Möglichkeit, die bei der Entladung erfolgte Umwandlung chemischer Energie in elektrische umzukehren.

Als ionenleitende Elektrolyte kommen häufig flüssige Elektrolyten aus einem Lösungsmittel und darin gelösten Ionen zum Einsatz. Unterschieden wird dabei in der Regel zwischen wässrigen Batterien, die Wasser als Lösungsmittel aufweisen, und nicht-wässrigen Batterien, welche ein organisches Lösungsmittel enthalten. Während die Elektrolyte von wässrigen Batterien meist Hydroxid-lonen enthalten, umfasst der Elektrolyt von nicht-wässrigen Batterien in der Regel ein gelöstes fluoriertes Salz wie Lithium-Hexafluorophosphat. Typische Vertreter wässriger Batterien sind unter anderem Alkali-, Nickel / Cadmium-, Zink / Braunstein-, Nickel / Zink- oder Nickel / Metallhydrid-Batterien. Vertreter mit nicht-wässrigen Elektrolyt-Systemen sind insbesondere Lithium-lonen- oder Lithium-Polymer-Batterien.

Sowohl nicht-wässrige als auch wässrige Batterien weisen häufig Elektroden und Separatoren in Form eines Elektroden-Separator-Verbundes auf. Dieser Verbund ist in der Regel mit dem jeweils passenden flüssigen Elektrolyten getränkt.

Daneben sind aber auch Batterien von Bedeutung, die einen Verbund aus Elektroden und einem sogenannten Festelektrolyten aufweisen. Bei einem Festelektrolyten handelt es sich um einen elektrisch leitenden Festkörper, dessen lonenleitfähigkeit wesentlich größer ist als seine elektrische Leitfähigkeit. Festelektrolyten kommt die Aufgabe zu, zwischen entgegengesetzt gepolten Elektroden eine ionenleitfähige Verbindung herzustellen. Darüber hinaus nehmen sie üblicherweise aber auch die Funktion eines Separators wahr, der einen unmittelbaren Kontakt der entgegengesetzt gepolten Elektroden unterbindet.

Festelektrolyte können polykristalline Keramiken, kristallin erstarrte Schmelzen, Gläser und kristalline oder amorphe Filme sein. Insbesondere im Zusammenhang mit Batterien sind aber auch Festelektrolyte aus ionenleitenden Polymeren aus dem Stand der Technik bekannt. Beispielsweise beschreiben US 6,858,670 B2 und US 2003/0139527 A1 Festelektrolyte für alkalische Batterien auf Basis von Polyvinylalkohol (PVA), wobei diese zusätzlich eine Glasfaserverstärkung zur Erzeugung einer ausreichenden mechanischen Stabilität aufweisen.

Problematisch bei der Verwendung derartiger Verstärkungsstoffe ist, dass sie den Innenwiderstand von Batterien erhöhen können, was deren Zellleistung herabsetzt.

Weitere Probleme bei bekannten Festelektrolyten sind eine oftmals nur unzureichende mechanische Stabilität und/oder Flexibilität, was sich insbesondere dann negativ auswirken kann, wenn Festelektrolyten mechanisch aufwendig verarbeitet werden. Wird ein Verbund aus Elektroden und einem Festelektrolyten etwa im Rahmen der Herstellung einer Wickelzelle zu einem spiralförmigen Wickel verarbeitet, so kann es zu einer Rissbildung in dem Festelektrolyten kommen, gegebenenfalls in Verbindung mit einem Ablösen des Festelektrolyten von der Elektrode.

Der vorliegenden Erfindung lag die Aufgabe zugrunde, Batterien mit einem Festelektrolyten bereitzustellen, der eine verbesserte Flexibilität und insbesondere auch Stabilität gegenüber mechanischen Belastungen besitzen. Die Batterien sollten möglichst einfach und kostengünstig in ihrer Herstellung sein.

Diese Aufgabe wird gelöst durch ein Verfahren mit den Merkmalen des Anspruchs 1. Bevorzugte Ausführungsformen des erfindungsgemäßen Verfahrens sind in den abhängigen Ansprüchen 2 bis 8 angegeben. Weiterhin sind auch der Elektroden-Festelektrolyt-Verbund mit den Merkmalen des Anspruchs 9 sowie die wässrige Batterie mit den Merkmalen des Anspruchs 12 Gegenstand der vorliegenden Erfindung. Bevorzugte Ausführungsformen des erfindungsgemäßen Elektroden-Festelektrolyt-Verbundes sind den abhängigen Ansprüchen 9 bis 11 zu entnehmen. Der Wortlaut sämtlicher Ansprüche wird hiermit durch Bezugnahme zum Inhalt dieser Beschreibung gemacht.

Das erfindungsgemäße Verfahren dient der Herstellung eines Elektroden-Festelektrolyt-Verbunds für wässrige Batterien. Der Verbund weist mindestens eine Elektrode und mindestens einen Festelektrolyten auf. Wie einleitend beschrieben, soll unter einer wässrigen Batterie eine Batterie verstanden werden, die ein wässriges oder zumindest wasserbasiertes Elektrolyt-System aufweist. Auch der Begriff "Festelektrolyt" wurde bereits erläutert.

Das Verfahren umfasst die folgenden Schritte:
(1) Bereitstellen einer Elektrode:
   Bei der bereitgestellten Elektrode handelt es sich vorzugsweise um eine Elektrode in Form einer dünnen Schicht, beispielsweise mit einer Dicke im Bereich zwischen 10 µm und 5 mm, bevorzugt zwischen 50 µm und 1 mm, sowie einer flächigen Ausdehnung von wenigen mm² bis einigen m², bevorzugt zwischen 1 mm² und 1 dm².
   Gegebenenfalls ist die Elektrode auf ein Substrat aufgebracht, beispielsweise auf einem folien-, netz- oder gitterförmigen Stromableiter.
(2) Bereitstellen einer Elektrolytmischung enthaltend Wasser, Polyvinylalkohol (PVA), ein Leitsalz und/oder ein Alkalihydroxid, elektrisch nichtleitende Partikel und/oder Fasern aus einem in Wasser unlöslichen organischen und/oder anorganischen Feststoff sowie Styrol-Butadien-Kautschuk (SBR):
   Diese Mischung dient der Herstellung des Festelektrolyten. Wie anhand der Mischungskomponenten unschwer zu erkennen ist, geht es bei der vorliegenden Erfindung um die Herstellung eines polymerbasierten Elektrolyten. Als Polymer kommt nämlich Polyvinylalkohol zum Einsatz. Im Festelektrolyten bildet der Polyvinylalkohol eine Matrix, in die die elektrisch nichtleitenden Partikel und/oder Fasern eingelagert sind. Das Leitsalz und/oder das Alkalihydroxid dient dazu, die lonenleitfähigkeit des Festelektrolyten zu erhöhen.
(3) Aufbringen der Mischung auf die Elektrode
   In der Regel wird die Elektrolytmischung in flüssiger oder pastenförmiger Form bereitgestellt, wobei die Konsistenz der Mischung sich von niedrigviskos bis hochviskos bewegen kann.

Überraschenderweise hat sich herausgestellt, dass sich mit einer Elektrolytmischung umfassend die obigen Komponenten Elektroden-Festelektrolyt-Verbünde herstellen lassen, die eine unerwartet hohe mechanische Stabilität bei gleichzeitig hoher Flexibilität aufweisen. Insbesondere auch Wickelzellen lassen sich problemlos herstellen.

Es ist bevorzugt, dass die Elektrolytmischung beim Aufbringen eine Temperatur zwischen 60 und 100 °C, bevorzugt zwischen 70 und 90 °C, insbesondere zwischen 80 und 90 °C, aufweist. Durch das Erwärmen kann die Viskosität der Mischung modifiziert werden. Hierzu kann beispielsweise die bereitgestellte wässrige Elektrolytmischung vor dem Aufbringen auf die gewünschte Temperatur erwärmt werden, beispielsweise mit Hilfe eines Wasserbades. Denkbar ist allerdings auch, dass das Aufbringen mittels einer Auftragsvorrichtung erfolgt, wobei nur der unmittelbar aufzutragende Teil erwärmt wird. Geeignet hierfür ist beispielsweise eine Art beheizbare Düse, welche nur den sie durchströmenden Teil der Elektrolytmischung temperiert. In Einzelfällen kann es auch bevorzugt sein, dass die bereitgestellte Elektrode temperiert wird.

Es kann vorteilhaft sein, den Verfahrensschritt des Aufbringens der Mischung unter einer Inertgasatmosphäre durchzuführen, insbesondere unter einer kohlendioxid- und/oder sauerstofffreien Atmosphäre.

Bei dem in der Elektrolytmischung enthaltenen SBR handelt es sich bekanntlich um ein Polymerisat aus Styrol und Butadien-(1,3). In einigen bevorzugten Ausführungsformen kann allerdings auch modifiziertes SBR zum Einsatz kommen. So kann es vorgesehen sein, dass das verwendete SBR Monomereinheiten enthält, die eine oder mehrere funktionelle Gruppen aufweisen, wie beispielsweise Carboxyl-, Carbonsäureanhydrid-, Nitril-, Hydroxyl-, Mercapto-, Acetat-, Ether-, Ester-, Amid- und/oder Halogen-Gruppen.

Vorzugsweise wird im Rahmen der vorliegenden Erfindung SBR eingesetzt, welcher eine Glasübergangstemperatur im Bereich zwischen minus 30 °C und 0 °C, bevorzugt zwischen minus 15 °C und 0 °C, insbesondere zwischen minus 10 °C und 0 °C, aufweist.

Das mittlere Partikelgröße des verwendeten SBR beträgt vorzugsweise zwischen 20 und 500 nm, insbesondere zwischen 100 und 300 nm.

Der Styrol-Butadien-Kautschuk ist bevorzugt in einem Anteil zwischen 2 und 15 Gew.-%, bevorzugt 4 und 10 Gew.-%, insbesondere 5 und 8 Gew.-%, in der Mischung enthalten (wobei sich die Prozentangaben auf das Gesamtgewicht der wässrigen Elektrolytmischung beziehen).

Der in der wässrigen Elektrolytmischung enthaltene Polyvinylalkohol unterliegt grundsätzlich keiner besonderen Einschränkung. Bevorzugt liegt das mittlere Molekulargewicht des Polyvinylalkohols allerdings zwischen 10000 und 200000 g/mol, bevorzugt zwischen 20000 und 150000 g/mol, insbesondere zwischen 50000 und 100000 g/mol.

Der Hydrolysegrad des verwendeten Polyvinylalkohols beträgt bevorzugt > 90 %, bevorzugt > 95 %, insbesondere > 98 %.

Es ist bevorzugt, dass der Polyvinylalkohol in einem Anteil zwischen 5 und 30 Gew.-%, bevorzugt zwischen 8 und 20 Gew.-%, insbesondere 10 und 14 Gew.-%, in der Mischung enthalten ist (wobei sich die Prozentangaben auf das Gesamtgewicht der wässrigen Elektrolytmischung beziehen).

Das Leitsalz und/oder Alkalihydroxid liegt in der Elektrolytmischung in der Regel vollständig in Form von solvatisierten Ionen vor. Vorzugsweise handelt es sich bei dem Leitsalz und/oder Alkalihydroxid um eine Komponente ausgewählt aus der Gruppe mit Zinkchlorid (ZnCl), Kaliumhydroxid (KOH), Natriumhydroxid (NaOH), Lithiumhydroxid (LiOH) und Cäsiumhydroxid (CsOH) oder um eine Mischung aus diesen Komponenten.

Vorzugsweise beträgt der Anteil an dem Leitsalz und/oder dem Alkalihydroxid in der Mischung zwischen 2 und 15 Gew.-%, bevorzugt 5 und 15 Gew.-%, insbesondere 8 und 12 Gew.-% (wobei sich die Prozentangaben auf das Gesamtgewicht der wässrigen Elektrolytmischung beziehen).

Das in der wässrigen Elektrolytlösung enthaltene Wasser unterliegt keiner besonderen Einschränkung, wobei vorzugsweise hochreines Wasser mit einem spezifischen Widerstand von weniger als 15 MΩ verwendet wird.

Die elektrisch nicht-leitenden Partikel und/oder Fasern sind bevorzugt in einem Anteil zwischen 0,2 und 5 Gew.-%, bevorzugt zwischen 0,5 und 3 Gew.-%, insbesondere zwischen 1 und 2 Gew.-%, in der Elektrolytmischung enthalten (wobei sich die Prozentangaben auf das Gesamtgewicht der wässrigen Elektrolytmischung beziehen). Besonders bevorzugt bestehen sie aus einem keramischen Feststoff, einem Salz, Glas, Basalt und/oder Kohlenstoff. Ein besonders bevorzugtes Beispiel hierfür ist Calciumcarbonat.

Insbesondere die Fasern können aber auch aus synthetischen Materialien, beispielsweise aus synthetischen Polymeren wie Polyamidfasern oder Polypropylenfasern bestehen. Ferner können auch Fasern anorganischen oder organischen Ursprungs, wie Glasfasern, Keramikfasern, Fasern aus Kohlenstoff oder Cellulosefasern, zum Einsatz kommen.

Vorzugsweise erfolgt das Aufbringen der Elektrolytmischung mittels eines Druckprozesses, insbesondere mittels eines Siebdruckprozesses. Beim Siebdruck handelt es sich bekanntlich um ein Druckverfahren, bei dem geeignete Mischungen oder Pasten mittels eines Rakels durch ein feinmaschiges Gewebe hindurch auf das zu druckende Material gepresst werden. An denjenigen Stellen des Gewebes, an denen dem Druckbild entsprechend nichts aufgedruckt werden soll, werden die Maschenöffnungen des Gewebes durch eine Schablone farbundurchlässig gemacht. An den übrigen Stellen durchdringt die Mischung oder Paste die Maschenöffnungen.

Besonders bevorzugt erfolgt das Aufbringen der Elektrolytmischung durch ein Heiß-Siebdruckverfahren. Bei diesem Verfahren wird das oben beschriebene feinmaschige Gewebe (das sogenannte Sieb) auf die gewünschte Temperatur erhitzt. Dieses Verfahren eignet sich insbesondere auch dazu, hoch viskose oder feste Materialien mittels Siebdruck aufzutragen, sofern die Temperatur des feinmaschigen Gewebes (des Siebs) in etwa der Schmelztemperatur bzw. Glasübergangstemperatur des Materials entspricht.

Grundsätzlich können auch andere Drucktechniken angewendet werden. Geeignete Druckverfahren sind dem Fachmann bekannt. Beispielhaft zu nennen sind Inkjet- und Bubblejet-Printing.

Selbstverständlich kann das Aufbringen der Elektrolytmischung auch durch weitere bekannte Verfahren wie beispielsweise Gießen, Spritzen, Rakeln, Spin Coating oder "Solution Casting" erfolgen.

Die beschriebenen Verfahrensschritte lassen sich mit weiteren, insbesondere auf einem Druckprozess basierenden, Prozessschritten kombinieren, so dass Elektroden-Festelektrolyt-Verbünde resultieren, die weit mehr als jeweils nur eine Elektroden- und Festelektrolytschicht umfassen. Beispielsweise denkbar sind Verbünde mit einer Schichtsequenz positive Elektrode / Festelektrolyt / negative Elektrode oder auch Ableiter / positive Elektrode / Festelektrolyt / negative Elektrode / Ableiter. Die einzelnen Schichten können dabei sequenziell übereinander gedruckt werden oder aber vorgefertigte Funktionsteile, beispielsweise ein metallischer Ableiter, werden bereitgestellt und anschließend überdruckt. Natürlich können einzelne Schichten auch mittels Aufsprühen, Pinseln, Rakeln oder Tauchbeschichten aufgebracht werden.

Insbesondere ist auch möglich, die Elektrode in Form von Bändern oder Bahnen bereitzustellen und in einem Durchlaufverfahren mit der Elektrolytmischung zu beschichten. Man erhält so einen band- oder bahnförmigen Elektroden-Festelektrolyt-Verbund, der direkt weiterverarbeitet oder beispielsweise aufgerollt oder aufgewickelt zwischengelagert werden kann. Wenn der Elektroden-Festelektrolyt-Verbund direkt in oder zu einer Zelle verbaut werden soll, so können aus dem band- oder bahnförmigen Verbund Bereiche oder Abschnitte mit der benötigten Geometrie (beispielsweise oval oder kreisförmig für Knopfzellen) gestanzt oder geschnitten werden. Natürlich kann der Verbund aber auch zunächst um eine oder mehrere weitere Funktionsschichten, beispielsweise eine weitere Elektrodenschicht, erweitert werden. Es lassen sich dann Bereiche oder Abschnitte mit der Sequenz positive Elektrode / Festelektrolyt / negative Elektrode bilden.

In einer besonders bevorzugten Ausführungsform weist die wässrige Elektrolytmischung die folgenden Komponenten in den folgenden Anteilen auf:
- zwischen 60 Gew.-% und 90 Gew.-% Wasser,
- zwischen 0,1 und 5 Gew.-%, insbesondere 0,8 Gew.-% SBR,
- zwischen 3 und 15 Gew.-%, insbesondere 8 Gew.-% PVA,
- zwischen 5 und 18 Gew.-%, insbesondere 12 Gew.-%, des Leitsalz und/oder des Alkalihydroxids, vorzugsweise KOH, und
- zwischen 0,5 und 5 Gew.-%, insbesondere 1,5 Gew.-%, der Partikel und/oder Fasern.

Die Gewichtsangaben beziehen sich auch hier auf die Gesamtmasse der wässrigen Elektrolytmischung, d.h. aus der Summe aus der Masse des Wassers, des Leitsalzes und/oder Alkalihydroxids, des SBR, des Polyvinylalkohols, der unlöslichen Partikel und/oder Fasern, sowie gegebenenfalls der Masse weiterer, fakultativer Bestandteile. Weiterhin gilt, dass sich die Gewichtsangaben in der Elektrolytmischung stets zu 100 Gew.-% ergänzen, ggf. auch unter Berücksichtigung weiterer fakultativer Komponenten.

Es kann vorgesehen sein, zur weiteren Verbesserung der mechanischen Eigenschaften und/oder der Flexibilität des Festelektrolyten der wässrigen Elektrolytmischung weitere Additive zuzusetzen. Zu nennen wären beispielsweise nanoskalige Oxide, wie beispielsweise Aluminiumoxid oder Siliziumdioxid. Ferner können auch organische Additive in Form eines Binders, wie beispielsweise Carboxymethylcellulose, zugegeben werden.

Der erfindungsgemäße Elektroden-Festelektrolyt-Verbund umfasst eine Elektrode und einen unmittelbar mit der Elektrode in Kontakt stehenden Festelektrolyten, wobei der Festelektrolyt eine Matrix aus Polyvinylalkohol sowie darin eingelagert elektrisch nichtleitende Partikel und/oder Fasern aus einem in Wasser unlöslichen organischen und/oder anorganischen Feststoff sowie Styrol-Butadien-Kautschuk und ein in Wasser gelöstes Leitsalz und/oder ein Alkalihydroxid umfasst. Alle diese Komponenten des Verbundes wurden im Zusammenhang mit dem erfindungsgemäßen Verfahren bereits beschrieben.

Im Rahmen der vorliegenden Erfindung ist es unerheblich, ob es sich bei der Elektrode um eine positive oder um eine negative Elektrode handelt. Besonders bevorzugt handelt es sich bei der Elektrode um eine Luftkathode für eine Metall-Luft-Zelle.

Besonders in diesem Fall wird die Elektrode bevorzugt in Form von Bändern oder Bahnen bereitgestellt und in einem Durchlaufverfahren mit der Elektrolytmischung beschichtet. Als Luftkathoden geeignete Gasdiffusionselektroden sind beispielsweise in der DE 37 22 019 A1 beschrieben. In solchen Elektroden bildet ein Kunststoffbinder (meist Polytetrafluorethylen, kurz PTFE) eine poröse Matrix aus, in die Partikel aus einem elektrokatalytisch aktiven Material (z.B. aus einem Edelmetall wie Platin oder Palladium oder aus einem Manganoxid) eingelagert sind. Diese müssen die Reduktion von Luftsauerstoff katalysieren können. Die Herstellung solcher Elektroden erfolgt in aller Regel, indem eine Trockenmischung aus dem Binder und dem Katalysator zu einer Folie ausgewalzt wird. Diese kann wiederum in ein Metallnetz, zum Beispiel aus Silber, Nickel oder versilbertem Nickel, eingewalzt werden. Das Metallnetz bildet eine Ableiterstruktur innerhalb der Elektrode und dient als Stromableiter. Bänder aus solchem Material lassen sich problemlos mit der beschriebenen Elektrolytmischung beschichten und weiterverarbeiten wie beschrieben.

In einer bevorzugten Ausführungsform hat der Elektroden-Festelektrolyt-Verbund die Form eines Wickels. Ein erfindungsgemäßer Elektroden-Festelektrolyt-Verbund lässt sich mit sehr kleinen Radien spiralförmig aufwickeln, ohne dass die Festelektrolytschicht, beispielsweise durch Rissbildung, Schaden nimmt. Zudem lassen sich die erfindungsgemäßen Verbünde viele Male zerstörungsfrei biegen, ohne dass es zu einem Ablösen der Elektrode von dem Festelektrolyten kommt. Diese Stabilität und Flexibilität prädestinieren einen erfindungsgemäßen Verbund für eine Verwendung in Wickelzellen. Daneben ebenso in Bereichen, in welchen eine Batterie in der Regel starken mechanischen Beanspruchung ausgesetzt ist und nicht über ein starres Gehäuse verfügt. Zu nennen wären hier beispielsweise Anwendungen im Niedrigstpreisbereich, wo besonders flach konstruierte Batterien verlangt werden. Ein Beispiel wäre die Herstellung von elektronischen Etiketten.

Weiterhin umfasst von der vorliegenden Erfindung ist auch eine wässrige Batterie, die mindestens einen gemäß dem erfindungsgemäßen Verfahren herstellbaren Elektroden-Festelektrolyt-Verbund enthält.

Bei einer erfindungsgemäßen wässrigen Batterie handelt es sich vorzugsweise um eine Metall/Luft-Zelle, beispielsweise eine Zink/Luft-Zelle, eine Metall/Metalloxid-Zelle wie beispielsweise eine Zink/Braunstein-, eine Zink/Nickeloxid- oder eine Zink/Silberoxid-Zelle, Nickel/Metallhydrid-Zelle und/oder eine primäre oder sekundäre Alkalizelle.

Weitere Merkmale und Vorteile der beschriebenen Erfindung ergeben sich aus der nachfolgenden Beschreibung bevorzugter Ausführungsformen in Verbindung mit den Unteransprüchen. Hierbei können Merkmale der Erfindung jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel: Herstellung einer bevorzugten Ausführungsform eines erfindungsgemäßen Elektroden-Festelektrolyt-Verbunds nach dem erfindungsgemäßen Verfahren.

Zunächst wurden 90 Gewichtsteile hochreines Wasser und 10 Gewichtsteile Polyvinylalkohol (M = 72.000 g/mol, Merck KG, Darmstadt) in ein Reaktionsgefäß eingewogen und unter Rühren in einem Wasserbad langsam auf 90 °C erhitzt, bis sich das gesamte PVA gelöst hat und eine homogene Reaktionsmischung vorlag. Zu dieser Mischung wurde eine konzentrierte Kaliumhydroxidlösung (44,4 Gewichtsteile Kaliumhydroxid und 55,6 Gewichtsteile Wasser) langsam unter Rühren zugegeben. War die Reaktionsmischung homogen, erfolgte die Zugabe von 1,5 Gewichtsteilen einer Cellulosefaser (Arbocel^{®}). Abschließend wurden eine wässrige Styrol-Butadien-Kautschuk-Emulsion (1 Gewichtsteile SBR und 1 Gewichtsteile Wasser) zugegeben und die Reaktionsmischung wird für weitere 10 min bei 90°C gerührt.

Mit der so erhaltenen wässrigen Elektrolytmischung wurde eine bandförmige gemäß der DE 37 22 019 A1 hergestellte Luftkathode beschichtet. Der entstehende Verbund wurde getrocknet.

Unter Verwendung des so hergestellten Elektroden-Festelektrolyt-Verbundes wurden Zink-Luft-Knopfzellen gefertigt. Hierzu wurden aus den Schichtverbünden kreisförmige Segmente ausgestanzt und in einen bereitgestellten Zellenbecher, dessen Boden Eintritts- bzw. Austrittsöffnungen für Sauerstoff aufweist, eingelegt. Dieser wurde mit einem mit alkalischem Elektrolyt getränkten Zinkpulver befüllten Deckel kombiniert. Ein separater Separator wurde nicht benötigt. Die Festelektrolyt-Schicht des Verbundes übernahm diese Funktion. Die so hergestellte Knopfzelle war voll funktionsfähig.

## Patentansprüche

1. Verfahren zur Herstellung eines Elektroden-Festelektrolyt-Verbunds für wässrige Batterien, der mindestens eine Elektrode und mindestens einen Festelektrolyt aufweist, umfassend die Schritte
- Bereitstellen einer Elektrode,
- Bereitstellen einer Elektrolytmischung enthaltend Wasser, Polyvinylalkohol, ein Leitsalz und/oder ein Alkalihydroxid, elektrisch nichtleitende Partikel und/oder Fasern aus einem in Wasser unlöslichen organischen und/oder anorganischen Feststoff sowie Styrol-Butadien-Kautschuk und
- Aufbringen der Mischung auf die Elektrode.

2. Verfahren nach Anspruch 1, **dadurch gekennzeichnet, dass** die Elektrolytmischung beim Aufbringen eine Temperatur zwischen 60 und 100 °C, bevorzugt zwischen 70 und 90 °C, insbesondere zwischen 80 und 90 °C, aufweist.

3. Verfahren nach einem der Ansprüche 1 oder 2, **dadurch gekennzeichnet, dass** der Styrol-Butadien-Kautschuk in einem Anteil zwischen 2 und 15 Gew.-%, bevorzugt zwischen 4 und 10 Gew.-%, insbesondere zwischen 5 und 8 Gew.-%, in der Mischung enthalten ist.

4. Verfahren nach einem der vorhergehenden Ansprüche, **dadurch gekennzeichnet, dass** der Polyvinylalkohol in einem Anteil zwischen 5 und 30 Gew.-%, bevorzugt zwischen 8 und 20 Gew.-%, insbesondere zwischen 10 und 14 Gew.-%, in der Mischung enthalten ist.

5. Verfahren nach einem der vorhergehenden Ansprüche, **dadurch gekennzeichnet, dass** das Leitsalz und/oder Alkalihydroxid ausgewählt ist aus der Gruppe mit KOH, NaOH, LiOH, CsOH, ZnCl und Mischungen davon.

6. Verfahren nach einem der vorhergehenden Ansprüche, **dadurch gekennzeichnet, dass** die elektrisch nicht leitenden Partikel und/oder Fasern aus einem keramischen Feststoff, einem Salz, Glas, Basalt und/oder Kohlenstoff bestehen.

7. Verfahren nach einem der vorhergehenden Ansprüche, **dadurch gekennzeichnet, dass** die Partikel und/oder Fasern in einem Anteil zwischen 0,2 und 5 Gew.-%, bevorzugt zwischen 0,5 und 3 Gew.-%, insbesondere zwischen 1 und 2 Gew.-%, in der Mischung enthalten sind.

8. Verfahren nach einem der vorhergehenden Ansprüche, **dadurch gekennzeichnet, dass** das Aufbringen der Mischung mittels eines Druckprozesses, insbesondere mittels eines Siebdruckprozesses, erfolgt.

9. Elektroden-Festelektrolyt-Verbund, umfassend eine Elektrode und einen unmittelbar mit der Elektrode in Kontakt stehenden Festelektrolyten, wobei der Festelektrolyt eine Matrix aus Polyvinylalkohol sowie darin eingelagert elektrisch nichtleitende Partikel und/oder Fasern aus einem in Wasser unlöslichen organischen und/oder anorganischen Feststoff sowie Styrol-Butadien-Kautschuk und ein in Wasser gelöstes Leitsalz und/oder ein Alkalihydroxid umfasst.

10. Elektroden-Festelektrolyt-Verbund nach Anspruch 9, **dadurch gekennzeichnet, dass** die Elektrode eine Luftkathode für eine Metall-Luft-Zelle ist.

11. Elektroden-Festelektrolyt-Verbund nach Anspruch 9, **dadurch gekennzeichnet, dass** er in Form eines Wickels vorliegt.

12. Wässrige Batterie umfassend einen Elektroden-Festelektrolyt-Verbund gemäß einem der Ansprüche 9 bis 11.
